# EUROPÄISCHE PATENTSCHRIFT

(11) **EP 2 390 430 B1**
(45) Veröffentlichungstag und Bekanntmachung des Hinweises auf die Patenterteilung: **07.12.2016**
(21) Anmeldenummer: 11401503.5
(22) Anmeldetag: 03.05.2011
(51) Int. Cl.: E03D 11/14, E03C 1/322, F16B 2/14

(54) **Befestigungsvorrichtung, insbesondere für wandhängende Sanitärobjekte**
Attachment device in particular for sanitary wall fixtures
Dispositif de fixation en particulier pour des appareils sanitaires muraux

(30) Priorität: 25.05.2010 DE 102010021429
(43) Veröffentlichungstag der Anmeldung: 30.11.2011
(73) Patentinhaber: fischerwerke GmbH & Co. KG, 72178 Waldachtal (DE)
(72) Erfinder: Marzolla, Stefano, 35125 Padova Italien (IT); Miotto, Moreno, 35028 Piove di Sacco Italien (IT)

(56) Entgegenhaltungen:
- WO-A1-2009/074301
- DE-A1- 2 252 970
- NL-A- 9 401 071

## Beschreibung

Die Erfindung betrifft eine Befestigungsvorrichtung, insbesondere für wandhängende Sanitärobjekte mit den Merkmalen des Oberbegriffs des Anspruchs 1.

Aus der Druckschrift WO 2009/074301 ist eine Befestigungsvorrichtung für ein Sanitärobjekt, im Speziellen ein Toilettenbecken, bekannt. Die bekannte Befestigungsvorrichtung weist einen hakenförmigen Grundkörper auf, der mit einer Anlagefläche an einer Wand zur Anlage kommt und an der Wand befestigbar ist. Auf einer senkrecht zur Wand stehenden Auflagerfläche kann das Sanitärobjekt abgestützt werden. Gehalten wird das Sanitärobjekt mittels einer Schraube, die durch eine Aufnahmeöffnung des Sanitärobjekts hindurch bis in den Grundkörper reicht. Am Grundkörper ist ein Schlitten mit einer Mutter linear geführt, wobei die Führung schräg zur Anlagefläche angeordnet ist. Die Schraube greift in die Mutter. Durch Anziehen der Mutter wird der Schlitten entlang seiner Führung verschoben und hierdurch eine Kraft erzeugt, die das Sanitärobjekt sowohl zum Grundkörper als auch zur Wand zieht.

Der Erfindung liegt die Aufgabe zu Grunde, die Steifigkeit zu erhöhen bei insgesamt kleineren Abmessungen.

Diese Aufgabe wird erfindungsgemäß durch die Merkmale des Anspruchs 1 gelöst. Die erfindungsgemäße Befestigungsvorrichtung weist einen Grundkörper auf, der eine Anlagefläche zur Anlage an einer Wand aufweist. Der Grundkörper dient der Befestigung eines Objekts, insbesondere eines Sanitärobjekts wie ein Toilettenbecken. Die Befestigungsvorrichtung weist einen Schlitten auf, der schräg zur Anlagefläche geführt ist. Dabei muss die Führung nicht linear sein, sondern sie kann beispielsweise auch bogenförmig sein, was sich auf die aus dem Anzugsmoment resultierenden Befestigungskräfte in Richtung und Größe auswirkt. Der Schlitten weist ein Innengewindeelement auf, das insbesondere drehfest mit dem Schlitten verbunden ist. Das Innengewindeelement kann auch einstückig mit dem Schlitten sein. Vorzugsweise ist ein Innengewinde vorgeformt, es kann jedoch auch ein Abschnitt vorgesehen werden, in dem während der Montage des Objekts an einer Wand erst das Innengewinde geformt wird. Hierzu kann beispielsweise eine Bohrung mit nach innen stehenden Längsrippen vorgesehen werden. Weiterhin weist die Befestigungsvorrichtung eine Schraube zur Durchführung durch eine Aufnahmeöffnung des Objekts auf, die in das Innengewindeelement einschraubbar ist.

Erfindungsgemäß ist das Verhältnis der Länge L zum Nenndurchmesser D des Innengewindeelements mindestens 1, insbesondere mindestens 1,5. Dabei bezieht sich die Länge L auf die Länge des Innengewindes. Das Innengewindeelement selbst, sofern es überhaupt mehrstückig mit dem Schlitten ist, kann tatsächlich länger sein. Gegenüber dem Stand der Technik, der eine Mutter als Innengewindeelement vorsieht, ist erfindungsgemäß das Innengewindeelement deutlich länger. Dies erlaubt es, dass die Führung des Schlittens relativ steil zur Anlagefläche steht. Eine steilere Führung bewirkt einerseits, dass der Grundkörper kompakter gebaut werden kann, jedoch andererseits, dass das auf die Schraube wirkende Biegemoment beim Anziehen der Schraube sehr starkt ansteigt. Ein langes Innengewindeelement kann hohe Biegemomente ableiten, so dass hierdurch insgesamt ein kompakterer Aufbau bei hoher Steifigkeit erreicht wird.

Äquivalent könnten erfindungsgemäß die Schraube und das Innengewindeelement vertauscht sein, das heißt die Schraube würde im Schlitten angeordnet und mit ihrem Kopf im Schlitten gehalten werden. Der Schaft der Schraube würde bis in das Objekt reichen und das Objekt mit einem Innengewindeelement, insbesondere einer Mutter, auf dem Schaft der Schraube befestigt werden. In diesem Fall entspricht die Länge L der Länge des Kopfes der Schraube.

Vorzugsweise ist die Führung des Schlittens am Grundkörper in einem Winkel W kleiner 55°, insbesondere 50° oder weniger, zur Anlagefläche angeordnet ist. Damit ist gemeint, dass Führungsflächen, die die Führung bilden, an ihrer steilsten Stelle mit der Anlagefläche den Winkel W einschließen. Insbesondere bei einem Winkel W von 50° ergibt sich ein günstiges Verhältnis aus den Abmaßen, der erreichbaren Steifigkeit und den erforderlichen Drehmomenten bei der Montage.

Um insbesondere das Biegemoment in der Schraube möglichst niedrig zu halten, schlägt die Erfindung weiterhin vor, dass das Innengewindeelement möglichst nahe an das zu befestigende Objekt rückt. Vorzugsweise weist der Grundkörper eine Auflagerfläche für ein zu befestigendes Objekt auf, und der Abstand A des Innengewindeelements dieser Auflagerfläche beträgt maximal das 2,0-fache, insbesondere maximal das 1,5-fache, des Nenndurchmessers D des Innengewindeelements. Da die Schraube in diesem Bereich nur schwierig entgegen dem Biegemoment abgestützt werden kann, führt dieses Merkmal dazu, dass selbst mit schlanken Schrauben eine hohe Steifigkeit und Stabiliät erreicht werden kann.

In einer bevorzugten Ausführung weist die erfindungsgemäße Befestigungsanordnung eine Führungsfläche für den Schlitten auf, die bis zu einer Auflagerfläche des Grundkörpers für das zu befestigende Objekt reicht. Hierdurch wird erreicht, dass der Schlitten und somit auch das Innengewindeelement nahe an das zu befestigende Objekt rückt, was einerseits einen kompakten Aufbau und andererseits niedrige Biegemomente in der Schraube ermöglicht. Entsprechend kommt es nicht darauf an, dass die Führungsfläche genau bis zu zur Auflagerfläche reicht, sondern es genügt, wenn sie zumindest bis in die Nähe reicht.

Vorzugsweise stützt sich die Schraube radial nicht direkt an dem Objekt ab, insbesondere wenn dieses aus empflindlicher Keramik gefertigt ist, sondern die Schraube weist eine Hülse zur radialen Anlage in der Aufnahmeöffnung des Objekts auf. Hierdurch werden Schäden am Objekt vermieden.

Da im Bereich der Hülse zumindest teilweise das Biegemoment der Schraube auf das Objekt übertragen werden kann, weist die Hülse eine Länge h auf, die mindestens dem 0,7-fachen des Nenndurchmessers D des Innengewindeelements entspricht.

Die Erfindung wird nachfolgend anhand eines Ausführungsbeispiels erläutert.

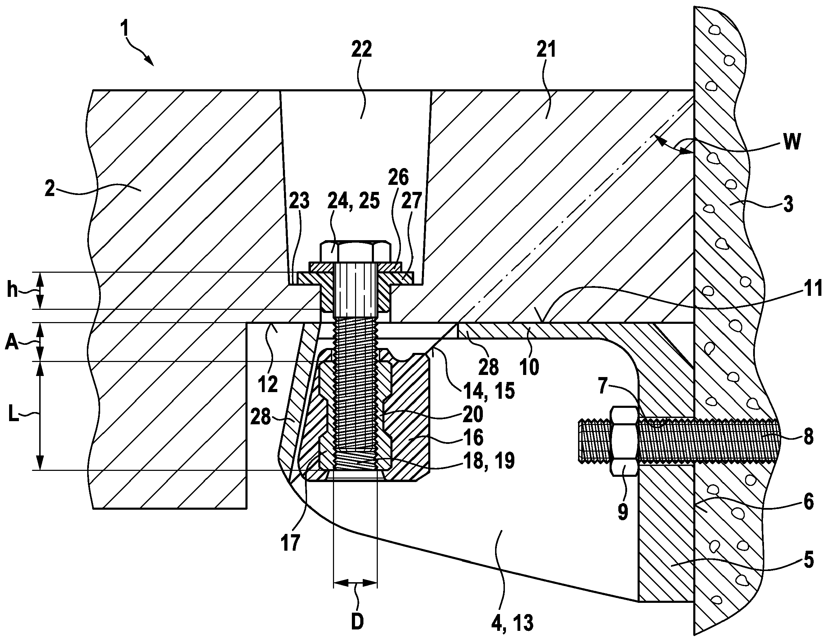

Die einzige Figur zeigt in einer Schnittdarstellung eine erfindungsgemäße Befestigungsvorrichtung 1 zur Befestigung eines Objekts 2, hier eines Toilettenbeckens aus Keramik, an einer Wand 3. Die Befestigungsvorrichtung 1 weist einen winkelförmigen Grundkörper 4 aus Kunststoff auf, dessen erster Schenkel 5 außen eine Anlagefläche 6 zur Anlage an der Wand 3 bildet. Im ersten Schenkel 5 ist ein Befestigungsloch 7 angeordnet, durch den eine in der Wand 3 eingemörtelte Gewindestange 8 ragt. Mittels einer Mutter 9 ist der Grundkörper 4 mit der Anlagefläche 6 gegen die Wand 3 gespannt. Ein zweiter Schenkel 10 des Grundkörpers 4 bildet eine Stütze für das Objekt 2. Die obere Seite des zweiten Schenkels 10 dient als Auflagerfläche 11, auf der das Objekt mit einer oberen Innenwand 12 zur Anlage kommt.

Oben in der Zeichnung entspricht im Ausführungsbeispiel auch oben, das heißt es handelt sich bei der Darstellung um einen vertikalen Schnitt. Allerdings könnte es sich ebenso gut um einen horizontalen Schnitt handeln oder das Ausführungsbeispiel könnte auf dem Kopf dargestellt sein.

Der winkelförmige Grundkörper 4 weist unter anderem zur Verstärkung Seitenwände 13 auf. Die Seitenwände 13 stehen senkrecht zu beiden Schenkeln 5, 10, wobei nur eine der Seitenwände 13 dargestellt ist, während die andere Seitenwand 13 symmetrisch vor der Schnittebene angeordnet ist. Nach innen weisend ist an der Seitenwand 13 je eine Führungsfläche 14 angeordnet, die schräg in einem Winkel W von etwa 50° zur Wand 3 bzw. zur Anlagefläche 6 steht. Die Führungsflächen 14 bilden eine Führung 15 eines zwischen den Seitenwänden 13 angeordneten, in etwa quaderförmigen Schlittens 16 aus Kunststoff, der eine korrespondierende Kontur (nicht dargestellt) aufweist. Im Schlitten 16 ist ein längliches, zylindrisches Innengewindeelement 17 aus Metall mit einem ein Innengewinde 18 aufweisenden Durchgangsloch 19 und einer mittigen Einschnürung 20 an der Außenseite angeordnet. Bei der Herstellung des Schlittens 16 wird das Innengewindeelement 17 als Einlegeteil umspritzt und findet daher optimalen Halt.

Das Objekt weist einen Befestigungsabschnitt 21 auf, der bis zur Wand 3 ragt und sich auf der Auflagerfläche 11 abstützt. Der Befestigungsabschnitt 21 wird durch eine Aufnahmeöffnung 22 durchsetzt. Die Aufnahmeöffnung 22 verjüngt sich zum Grundkörper 4 hin stufenartig und bildet hierdurch eine Schulter 23, an der sich der Kopf 24 einer Schraube 25 aus Stahl abstützt. Die Schraube 25 wird bei der Montage des Objekts 2 an der Wand 3 nach dem Aufsetzen des Objekts 2 auf dem Grundkörper 4 in die Aufnahmeöffnung 22 gesteckt. Sie ragt durch die Aufnahmeöffnung 22 hindurch bis in den Grundkörper 4 und wird in das Innengewindeelement 17 eingeschraubt. Die Abstützung an der Schulter 23 erfolgt nicht direkt, da der Kontakt von Stahl auf Keramik zu Rissen in der Keramik führen könnte. Der Kopf 24 stützt sich daher über eine Unterlegscheibe 26 und eine hutförmige Hülse 27 auf der Schulter 23 ab. Gleichzeitig verhindert die Hülse 27 auch eine unmittelbare radiale Anlage der Schraube 25 in der Aufnahmeöffnung 22.

Beim Anziehen der Schraube 25 wird der Schlitten 16 schräg entlang der Führung 15 gezogen. Dies bewirkt ein Heranziehen des Objekts 2 sowohl in Richtung des Grundkörpers 4 als auch in Richtung der Wand 3.

Um einen kompakten und gleichzeitig steifen sowie stabilen Aufbau zu erreichen, verläuft die Führung 15 wie beschrieben in einem Winkel W von etwa 50° zur Anlagefläche 6 und die Führungsflächen 14 reichen bis zur Auflagerfläche 11 des Grundkörpers 4. Im Rahmen einer Vormontage wird der Schlitten 16 von unten in den Grundkörper 4 eingesetzt und durch eine Schnappverbindung (nicht dargestellt) an der Führung 15 gehalten. Die Führung 15 ist zu beiden Seiten durch Anschläge 28 begrenzt, so dass der Schlitten während der Montage nicht aus der Führung 15 gleiten kann.

Durch den steilen Winkel W treten erhebliche Biegemomente in der Schraube 25 auf. Damit dieses Biegemoment nicht zu hoch wird, ist der Abstand A zwischen der Innengewindehülse 17 und der Auflagerfläche 11 gering gehalten und durch den unteren Anschlag 28 auf etwa das 1,2-fache des Nenndurchmessers D der Schraube 25 bzw. des Innengewindeelements 17 begrenzt. Somit ist der entsprechende Biegearm, der sich durch die Anlage der Schraube 25 an der Hülse 27 einerseits und am Innengewinde 18 andererseits ergibt, relativ kurz. Damit das Biegemoment auch gut auf das Innengewindeelement 17 und von dort in den Schlitten 16 übertragen werden kann, ist das Innengewindeelement 17 bzw. das Innengewinde 18 relativ lang. Ihre Länge L beträgt etwa das 3-fache des Nenndurchmessers D der Schraube 25 bzw. des Innengewindeelements 17. Im Bereich der Aufnahmeöffnung 22 wird das Biegemoment teilweise axial vom Kopf 24 der Schraube 25 und teilweise radial über die Hülse 27 übertragen. Entsprechend braucht die Hülse 27 nicht so lang wie das Innengewindeelement 17 sein. Ihre Länge h beträgt etwa das 1,25-fache des Nenndurchmessers D der Schraube 25 bzw. des Innengewindeelements 17.

### Bezugszeichenliste

### Befestigungsvorrichtung, insbesondere für wandhängende Sanitärobjekte

- 1: Befestigungsvorrichtung
- 2: Objekt
- 3: Wand
- 4: Grundkörper
- 5: erster Schenkel
- 6: Anlagefläche
- 7: Befestigungsloch
- 8: Gewindestange
- 9: Mutter
- 10: zweiter Schenkel
- 11: Auflagerfläche
- 12: Innenwand
- 13: Seitenwand
- 14: Führungsfläche
- 15: Führung
- 16: Schlitten
- 17: Innengewindeelement
- 18: Innengewinde
- 19: Durchgangsloch
- 20: Einschnürung
- 21: Befestigungsabschnitt
- 22: Aufnahmeöffnung
- 23: Schulter
- 24: Kopf
- 25: Schraube
- 26: Unterlegscheibe
- 27: Hülse
- 28: Anschlag
- A: Abstand zwischen der Innengewindehülse 17 und der Auflagerfläche 11
- D: Nenndurchmessers der Schraube 25 bzw. des Innengewindeelements 17
- h: Länge der Hülse 27
- L: Länge des Innengewindeelements 17
- W: Winkel der Führung 15 zur Anlagefläche 6

## Patentansprüche

1. Befestigungsvorrichtung (1), insbesondere für wandhängende Sanitärobjekte, mit
- einem Grundkörper (4), der eine Anlagefläche (6) zur Anlage an einer Wand (3) aufweist, und an dem ein Objekt (2), insbesondere ein Sanitärobjekt, befestigbar ist,
- einem Schlitten (16), der am Grundkörper (4) schräg zur Anlagefläche (6) geführt ist und ein Innengewindeelement (17) aufweist, und
- einer Schraube (25) zur Durchführung durch eine Aufnahmeöffnung (22) des Objekts (2), die in das Innengewindeelement (17) einschraubbar ist,
**dadurch gekennzeichnet, dass** das Verhältnis der Länge (L) zum Nenndurchmesser (D) des Innengewindeelements (17) mindestes 1, insbesondere mindestens 1,5, ist.

2. Befestigungsvorrichtung nach Anspruch 1, **dadurch gekennzeichnet, dass** eine Führung (15) des Schlittens (16) am Grundkörper (4) in einem Winkel (W) kleiner als 55°, insbesondere 50° oder weniger, zur Anlagefläche (6) angeordnet ist.

3. Befestigungsvorrichtung nach Anspruch 1 oder 2, **dadurch gekennzeichnet, dass** der Grundkörper (4) eine Auflagerfläche (11) für ein zu befestigendes Objekt (2) aufweist, und dass der Abstand (A) des Innengewindeelements (17) zur Auflagerfläche (11) maximal das 2,0-fache, insbesondere maximal das 1,5-fache, des Nenndurchmessers (D) des Innengewindeelements (17) beträgt.

4. Befestigungsvorrichtung nach einem der Ansprüche 1 bis 3, **dadurch gekennzeichnet, dass** der Schlitten (16) entlang einer oder mehrerer Führungsflächen (14) am Grundkörper (4) geführt ist und dass mindestens eine der Führungsflächen (14) im Wesentlichen bis zu einer Auflagerfläche (11) des Grundkörpers (4) für ein zu befestigendes Objekt (2) reicht.

5. Befestigungsvorrichtung nach einem der Ansprüche 1 bis 4, **dadurch gekennzeichnet, dass** die Schraube (25) eine Hülse (27) zur radialen Anlage in der Aufnahmeöffnung (22) des Objekts (2) aufweist.

6. Befestigungsvorrichtung nach Anspruch 5, **dadurch gekennzeichnet, dass** die Länge (h) der Hülse (27) mindestens dem 0,7-fachen des Nenndurchmessers (D) des Innengewindeelements (17) entspricht.

## Claims

1. Fixing device (1), especially for wall-mounted items of sanitaryware, having
- a main body (4), which has a contact face (6) for resting against a wall (3) and to which an object (2), especially an item of sanitaryware, can be attached,
- a carriage (16) which is guided on the main body (4) obliquely with respect to the contact face (6) and has an internal thread element (17), and
- a screw (25) for passing through a receiving opening (22) of the object (2), which screw can be screwed into the internal thread element (17),
**characterised in that** the ratio of the length (L) to the nominal diameter (D) of the internal thread element (17) is at least 1, especially at least 1.5.

2. Fixing device according to claim 1, **characterised in that** a guide (15) of the carriage (16) is arranged on the main body (4) at an angle (W) of less than 55°, especially 50° or less, with respect to the contact face (6).

3. Fixing device according to claim 1 or 2, **characterised in that** the main body (4) has a supporting face (11) for an object (2) to be fixed, and the distance (A) of the internal thread element (17) from the supporting face (11) is a maximum of 2.0 times, especially a maximum of 1.5 times, the nominal diameter (D) of the internal thread element (17).

4. Fixing device according to any one of claims 1 to 3, **characterised in that** the carriage (16) is guided along one or more guide faces (14) on the main body (4), and at least one of the guide faces (14) extends substantially as far as a supporting face (11) of the main body (4) for an object (2) to be fixed.

5. Fixing device according to any one of claims 1 to 4, **characterised in that** the screw (25) has a sleeve (27) for radial contact in the receiving opening (22) of the object (2).

6. Fixing device according to claim 5, **characterised in that** the length (h) of the sleeve (27) corresponds to at least 0.7 times the nominal diameter (D) of the internal thread element (17).

## Revendications

1. Dispositif de fixation (1) notamment dévolu à des objets sanitaires à suspension murale, comprenant
- un corps de base (4) doté d'une surface de contact (6) destinée à la venue en applique contre une paroi (3), et auquel peut être fixé un objet (2), en particulier un objet sanitaire,
- un coulisseau (16) guidé sur ledit corps de base (4), à l'oblique par rapport à ladite surface de contact (6), et pourvu d'un élément (17) à filetage intérieur, et
- une vis (25) conçue pour traverser un orifice de réception (22) dudit objet (2), et pouvant être vissée dans ledit élément (17) à filetage intérieur,
**caractérisé par le fait que** le rapport, entre la longueur (L) et le diamètre nominal (D) de l'élément (17) à filetage intérieur, est d'au moins 1 et notamment d'au moins 1,5.

2. Dispositif de fixation selon la revendication 1, **caractérisé par le fait qu'**un guide (15) du coulisseau (16) est implanté sur le corps de base (4) suivant un angle (W) inférieur à 55°, en particulier de 50° ou moins, par rapport à la surface de contact (6).

3. Dispositif de fixation selon la revendication 1 ou 2, **caractérisé par le fait que** le corps de base (4) comporte une surface d'appui (11) dédiée à un objet (2) à fixer ; et **par le fait que** la distance (A), séparant l'élément (17) à filetage intérieur d'avec ladite surface d'appui (11), représente au maximum 2 fois, en particulier au maximum 1,5 fois le diamètre nominal (D) dudit élément (17) à filetage intérieur.

4. Dispositif de fixation selon l'une des revendications 1 à 3, **caractérisé par le fait que** le coulisseau (16) est guidé, sur le corps de base (4), le long d'une ou plusieurs surface(s) de guidage (14) ; et **par le fait qu'**au moins l'une desdites surfaces de guidage (14) s'étend, pour l'essentiel, jusqu'à une surface d'appui (11) dudit corps de base (4) qui est dédiée à un objet (2) à fixer.

5. Dispositif de fixation selon l'une des revendications 1 à 4, **caractérisé par le fait que** la vis (25) est munie d'une douille (27), en vue de venir radialement en applique dans l'orifice de réception (22) de l'objet (2).

6. Dispositif de fixation selon la revendication 5, **caractérisé par le fait que** la longueur (h) de la douille (27) correspond à au moins 0,7 fois le diamètre nominal (D) de l'élément (17) à filetage intérieur.
